# EUROPÄISCHE PATENTSCHRIFT

(11) **EP 0 869 286 B1**
(45) Veröffentlichungstag und Bekanntmachung des Hinweises auf die Patenterteilung: **02.05.2003**
(21) Anmeldenummer: 98250071.2
(22) Anmeldetag: 26.02.1998
(51) Int. Cl.: F15B 13/044, F15B 13/042, F16K 31/06

(54) **Elektropneumatisches Wegeventil**
Electropneumatic directional control valve
Distributeur électropneumatique

(30) Priorität: 07.03.1997 DE 19711262
(43) Veröffentlichungstag der Anmeldung: 07.10.1998
(73) Patentinhaber: Rexroth Mecman GmbH, 30453 Hannover (DE)
(72) Erfinder: Scharnowski, Gerhard, Dipl.-Ing., 30989 Gehrden (DE); Kook, Ralf, 30629 Hannover (DE); Mauentöbben, Reinhard, 30659 Hannover (DE)
(74) Vertreter: Maiwald Patentanwalts GmbH

(56) Entgegenhaltungen:
- WO-A-95/14874
- DE-A- 3 034 817
- DE-A- 4 136 560
- FR-A- 1 423 434
- US-A- 3 208 721
- US-A- 4 658 231
- US-A- 4 715 578

## Beschreibung

Die Erfindung betrifft ein elektropneumatisches Wegeventil gemäß dem Oberbegriff des Anspruchs 1.

Derartige Wegeventile in Form von Sitzventilen sind in der Pneumatik hinlänglich bekannt und werden als Schalter zur Steuerung von Druckmittelflüssen verwendet, wobei mehrere Anschlüsse für Druckmittelleitungen wahlweise miteinander verbindbar sind.

Der Stellantrieb kann hierbei nach Art einer Vorsteuerung ausgebildet sein, wie beispielsweise aus dem Produktkatalog "Know-how in Pneumatik" (11/93, Seite 7.024) bekannt ist. Derartige Stellantriebe verwenden elektrische Stellsignale zum Be- oder Entlüften einer Steuerkammer über zwei Pilotventile, um über einen Stößel das Wegeventil anzusteuern.

Bekannte Stellantriebe haben den Nachteil, dass zur Übertragung der Stellbewegung vom Stellantrieb zu einem Ventilsitz mehrere Einzelteile, wie Stößel, Federn, Zwischenscheiben und Ventilteller erforderlich sind. Speziell bei der Verwendung einer Vorsteuerung als Stellantrieb wird eine Druckmittelzufuhr in die Steuerkammer meist über eine Membrane in eine Längsbewegung des koaxial an der Membran befestigten Stößels umgesetzt, an dessen Ende sich ein Verschlusselement in Form eines Ventiltellers befindet, der auf einen Ventilsitz wirkt. Dabei tritt das Problem auf, dass die Befestigung des Stößels an der Membrane eine genaue Stößelzentrierung erfordert und eine zusätzliche druckdichte Führung des Stößels im Ventilkörper erfolgen muß. Zur Justierung des Abstandes zwischen Ventilteller und Ventilsitz kommen gewöhnlich zusätzliche Ausgleichsscheiben zur Anwendung, die bei der Befestigung des Stößels an der Membrane eingesetzt werden. Insgesamt verursacht dieser komplizierte Aufbau einen hohen Montageaufwand.

Aus der WO 95/14874 geht ein gattungsgemäßes Wegeventil hervor, das ein membranartiges Verschlusselement aufweist. Das Verschlusselement trennt die Steuerkammer der Vorsteuerung von einer Arbeitskammer im Innenraum. Das Verschlusselement besteht größtenteils aus einem elastischen Dichtungsmaterial, wobei Teile seines Außenumfangs auch als Dichtung zwischen dem Innenraum und der Atmosphäre dienen.

Ein Nachteil dieses Standes der Technik besteht darin, dass eine Verschlussfunktion für den Ventilsitz arbeitskammerseitig und eine Anschlagfunktion nur steuerkammerseitig über zusätzlich eingegossene plattenartige Mittel realisiert werden. Arbeitskammerseitig dient der Ventilsitz selbst als Endanschlag, was im Extremfall Beschädigungen der Dichtfläche des Verschlusselements hervorrufen kann.

Der Erfindung liegt die Aufgabe zugrunde, Bauteile für die Übertragung der Stellbewegung vom Stellantrieb zum Ventilsitz zu schaffen, die leicht herstellbar und montierbar sind, wobei gleichzeitig eine zuverlässige Endlagenbegrenzung gewährleistet werden soll.

Ausgehend von einem elektropneumatischen Wegeventil gemäß dem Oberbegriff des Anspruchs 1 wird die Aufgabe in Verbindung mit dessen kennzeichnenden Merkmalen gelöst.

Erfindungsgemäß ist vorgesehen, ein einstückiges Verschlusselement zu verwenden. Dieses Verschlusselement ist unmittelbar mit dem Stellantrieb verbunden, so dass auf einen separaten Stößel und damit erforderlicherer weiterer Bauteile zur Übertragung der Stellbewegung vom Stellantrieb zum Ventilsitz verzichtet werden kann. Das Verschlusselement besteht aus einem elastischen Material, das in der Lage ist, die Dichtungsfunktion in Verbindung mit dem Ventilsitz zu übernehmen. Damit kann auf separate Dichtringe oder auf eine aufvulkanisierte Dichtung am Ventilsitz bzw. am Verschlusselement verzichtet werden. Eine separate Dichtung zur Abdichtung des Innenraums des Ventils zur Atmosphäre ist ebenfalls entbehrlich, da es die erfindungsgemäße Lösung vorsieht, dass Teile des Außenumfanges des Verschlusselementes als Dichtung ausgebildet sind.

Speziell bei der Verwendung eines Stellantriebes nach Art einer Vorsteuerung sieht die erfindungsgemäße Lösung die Ausgestaltung des Verschlusselementes in Form einer Membrane vor, die über eine Steuerkammer die Stellbewegung erzeugt. Das Verschlusselement trennt die Steuerkammer von einer Druckkammer des Ventilinnenraumes. Diese Druckkammer kann beispielsweise eine Arbeitskammer sein, die mit dem Anschluß für eine Arbeitsleitung in Verbindung steht. Das Verschlusselement weist an seiner der Arbeitskammer zugewandten Seite einen angeformten Ansatz auf. Dieser Ansatz korrespondiert nach Art eines Ventiltellers mit dem Ventilsitz. An der der Arbeitskammer abgewandten Seite weist das Verschlusselement einen ebenfalls angeformten Anschlag auf. Dieser Anschlag dient einerseits zur Versteifung der Membrane und andererseits ermöglicht er in Verbindung mit einem Vorsprung am Ventilkörper auf der einen Seite und der Wandung der Steuerkammer auf der anderen Seite eine Endlagenbegrenzung für die Membranbewegung.

Die Verwendung eines derartigen hochfunktionsintegrierten einstückigen Verschlusselementes gestattet bei einem minimalen Bauteilaufwand eine einfache Montage und ist als Spritzgußteil leicht herstellbar.

Weiterhin besitzt das Verschlusselement für einen Stellantrieb nach Art einer Vorsteuerung außenradial eine angeformte Dichtwulst oder Dichtlippe. Diese erfindungsgemäße Maßnahme gestattet es, unter Verzicht auf separate Dichtungen eine druckdichte Verbindung von Ventilkörper und Stellantrieb herzustellen, so dass sowohl zwischen der Arbeitskammer im Inneren des Ventilkörpers zur Atmosphäre als auch zwischen der Steuerkammer und der Atmosphäre und zwischen der Steuerkammer und der Arbeitskammer kein Druckmittel gelangen kann.

Als vorteilhafte Weiterbildung kann in das membranartige Verschlusselement ein starrer Verstärkungsring oder eine Verstärkungshülse eingegossen oder eingeknüpft werden, um damit die Steifigkeit im Bereich des auf den Ventilsitz wirkenden Ansatzes zu verbessern.

Als weitere vorteilhafte Ausgestaltung kann an das membranartige Verschlusselement eine hülsenartige Führung koaxial am Anschlag des Verschlusselementes angeformt werden, die mit einem ortsfest zum Ventilkörper angeordneten Führungsstift korrespondiert. Diese Führung verbessert insbesondere bei großflächigen membranartigen Verschlusselementen eine genaue Positionierung des als Ventilteller dienenden Ansatzes zum Ventilsitz.

Eine koaxial zwischen Verschlusselement und Ventilsitz angeordnete Druckfeder dient dem Verschlusselement zur Rückstellung in die Ausgangslage.

Insbesondere bei einem 3/3-Wegeventil, das zur wahlweise Be- und Entlüftung einer Arbeitsleitung ein Entlüftungsventil enthält, das die Arbeitsleitung mit der Atmosphäre verbindet, sowie ein Belüftungsventil enthält, das die Arbeitsleitung mit einer Druckleitung verbindet, ist erfindungsgemäß der Entlüftungsventilsitz an der Stirnseite einer beweglich im Ventilkörper angeordneten Ventilhülse angeformt. Auf diesen Entlüftungsventilsitz wirkt das Verschlusselement. Der Belüftungsventilsitz ist am Ventilkörper angeordnet. Dort hindurch erstreckt sich die Ventilhülse, an deren Außenumfang sich ein Dichtring befindet, der in Zusammenwirken mit einer Ausnehmung am Außenumfang der Ventilhülse als Verschlusselement des Belüftungsventilsitzes dient.

Die Ventilhülse ist am dem Entlüftungsventilsitz gegenüberliegenden Ende in einem komplementär zur Ventilhülse ausgebildeten Teil des Ventilkörpers geführt, wobei die Ventilhülse im Bereich der Führung einen Dichtring aufweist, der eine Druckkammer druckdicht von einer Entlüftungskammer trennt.

Andere vorteilhafte Weiterbildungen werden nachstehend zusammen mit der Beschreibung einer bevorzugten Ausführungsform der Erfindung anhand der Figuren näher dargestellt. Es zeigt:
- Fig. 1: eine Schnittdarstellung eines 3/3-Wegeventils mit Stellantrieb nach Art einer Vorsteuerung, und
- Fig. 2: eine Seitenansicht einer Führung für ein membranartiges Verschlusselement, das in Stellantrieben nach Art einer Vorsteuerung gemäß Figur 1 zum Einsatz kommt.

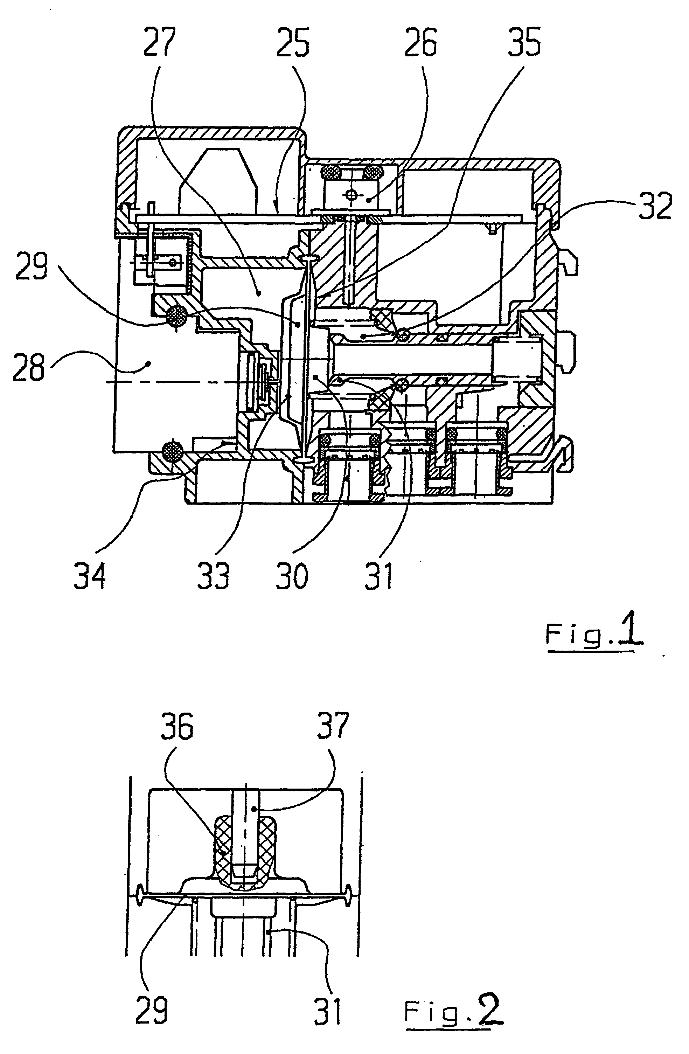

In Figur 1 ist eine Verwendung als Druckregelventil mit integrierter Regelelektronik 25 und ebenfalls für die Druckregelung erforderlichen Drucksensor 26 zur Istwert-Ermittlung dargestellt. Das 3/3-Wegeventil dieses Druckregelventils ist nach Art eines Vorsteuerventils ausgebildet. Dieses Prinzip für einen Stellantrieb weist als Unterschied zu einem Wegeventil mit Porportionalmagnetantrieb eine Steuerkammer 27 auf, die über zwei Pilotventile 28 (in Figur 2 nicht erkennbar, da hintereinanderliegend) be- und entlüftbar ist. Das bei diesem Stellantrieb zum Einsatz kommende Verschlusselement 29 ist membranartig ausgebildet und besteht ebenfalls aus einem elastischen, dichtendem Material. Am Verschlusselement 29 ist der Ansatz 30 angeformt. Dieser korrespondiert mit dem Ventilsitz 10 des 3/3-Wegeventils.

Die Vorsteuerung drückt zur Belüftung das Verschlusselement 29, das druckdicht am Ventilsitz 10 anliegt, den Dichtring 11 der Ventilhülse 12 vom Ventilsitz 20 ab. In der Entlüftungsstellung liegt der Dichtring 11 am Ventilsitz 20 an. Das Verschlusselement 29 öffnet den Ventilsitz 10. In der gezeigten Nullstellung letztlich sind sowohl der Ventilsitz 10 als auch der Ventilsitz 20 geschlossen, so dass weder eine Belüftung noch eine Entlüftung erfolgt.

Der Schwerpunkt liegt in diesem Ausführungsbeispiel auf die spezielle Ausgestaltung des Verschlusselements 29. An der dem Ansatz 30 gegenüberliegenden Seite ist am Verschlusselement 29 ein Anschlag 33 angeformt. Der Anschlag 33 dient zum einen zur Versteifung der Membrane im Wirkbereich des Ventilsitzes 10, zu deren Unterstützung ein in Figur 2 nicht dargestellter Verstärkungsring in das Verschlusselement 29 eingegossen oder eingeknüpft sein kann. Zum anderen dient der Anschlag 33 auch der Endlagenbegrenzung des membranartigen Verschlusselements 29 in Zusammenwirken mit der Wandung 34 der Steuerkammer 27 auf der einen Seite und im Zusammenwirken mit dem Absatz 35 am Ventilkörper auf der anderen Seite.

Außenradial weist das Verschlusselement 29 eine Dichtwulst auf, die sowohl zur Einspannung des Verschlusselements 29 als auch zur Dichtung der benachbarten Druckkammern untereinander und mit der Atmosphäre dient.

Insbesondere bei größeren Durchmessern des membranartigen Verschlusselements 29 ist es zur Zentrierung von Vorteil, koaxial zum Anschlag 33 des Verschlusselements 29 eine dort angeformte hülsenartige Führung 36 nach Figur 2 vorzusehen, die mit einem ortsfest bezüglich des Ventilkörpers 3 angeordneten Führungsstift 37 korrespondiert.

## Patentansprüche

1. Elektropneumatisches Wegeventil, insbesondere 3/3-Wegeventil, mit an einem Ventilkörper angeordneten Leitungsanschlüssen und mindestens einem im Innenraum angeordneten Ventilsitz mit darauf wirkendem membranartigen Verschlusselement (29), das von einem nach Art einer Vorsteuerung ausgebildeten Stellantrieb bewegbar ist und die hierfür dienende Steuerkammer (27) von einer Arbeitskammer (32) trennt, wobei das Verschlusselement (29) aus einem elastischen Dichtungsmaterial besteht und Teile seines Außenumfangs als Dichtung zwischen dem Innenraum und der Atmosphäre dienen, **dadurch gekennzeichnet, dass** das Verschlusselement (29) weiterhin an der der Arbeitskammer (32) zugewandten Seite einen angeformten Ansatz (30) aufweist, der mit dem Ventilsitz korrespondiert und an der der Arbeitskammer abgewandten Seite einen angeformten Anschlag (33) besitzt, der zur beidseitigen Endlagenbegrenzung einerseits an einer Wandung (34) der Steuerkammer (27) und andererseits an einem Absatz (35) der Arbeitskammer (32) zur Anlage kommt.

2. Elektropneumatisches Wegeventil nach Anspruch 1,
**dadurch gekennzeichnet, dass** in das Verschlusselement (29) ein starrer Verstärkungsring oder eine Verstärkungshülse integriert ist.

3. Elektropneumatisches Wegeventil nach Anspruch 1,
**dadurch gekennzeichnet, dass** eine hülsenartige Führung (36) koaxial am Anschlag (33) des Verschlusselements (29) angeformt ist, die mit einem ortsfest zum Ventilkörper angeordneten Führungsstift (37) korrespondiert.

4. Elektropneumatisches Wegeventil nach einem der vorstehenden Ansprüche,
**dadurch gekennzeichnet, dass** das Verschlusselement (29) außenradial eine angeformte Dichtwulst oder Dichtlippe aufweist.

5. Elektropneumatisches Wegeventil nach einem der vorstehenden Ansprüche,
**dadurch gekennzeichnet, dass** der nach Art einer Vorsteuerung ausgebildete Stellantrieb mit zwei Pilotventilen (28) ausgestattet ist.

## Claims

1. Electro-pneumatic directional valve, in particular a 3/3 directional valve, having line ports arranged at a valve body and at least one valve seat arranged in the interior with a membrane-like closure element (29) acting thereon, which is movable in the manner of an actuating drive arranged as pre-control and which separates the control chamber (27) serving therefore from an operating chamber (32), wherein the closure element (29) is comprised of an elastic sealing material and parts of its outer circumference serve as a sealing between the interior and the atmosphere,
**characterized in that** the closure element (29) is furthermore provided with a socket (30) formed thereon, on the side facing the operating chamber (32), which corresponds with the valve seat and which has a limit stop (33) formed thereon, on the side opposite the operating chamber, which abuts on the one hand to a wall (34) of the control chamber (27) and on the other hand to a shoulder (35) of the operating chamber (32) for limiting the end positions on both sides.

2. Electro-pneumatic directional valve according to claim 1,
**characterized in that** a rigid reinforcement ring or a reinforcement sleeve is integrated into the closure element (29).

3. Electro-pneumatic directional valve according to claim 1,
**characterized in that** a sleeve-like guidance (36) is coaxially formed on the limit stop (3) of the closure element (29), which corresponds with a guiding pin (37), which is stationary to the valve body.

4. Electro-pneumatic directional valve according to one of the preceding claims,
**characterized in that** the closure element (29) comprises an outward, radial sealing bead or sealing lip formed thereon.

5. Electro-pneumatic directional valve according to one of the preceding claims,
**characterized in that** the actuating drive arranged in the manner of a pre-control comprises two pilot valves (28).

## Revendications

1. Distributeur électro-pneumatique, en particulier distributeur à 3 voies/3 positions, comportant des raccords de conduite agencés sur un corps de distributeur et au moins un siège de distributeur agencé dans l'espace intérieur comportant un élément d'obturation (29) en forme de membrane agissant sur celui-ci et déplaçable par un servomoteur réalisé à la manière une commande pilote et séparant la chambre de commande (27) servant à cet effet d'une chambre de travail (32), l'élément d'obturation (29) étant constitué d'un matériau d'étanchement élastique et des parties de sa périphérie extérieure servant de joint entre l'espace intérieur et l'atmosphère,
**caractérisé en ce que** l'élément d'obturation (29) possède en outre sur le côté tourné vers la chambre de travail (32) un talon conformé (30) qui correspond avec le siège de distributeur et possède sur le côté détourné de la chambre de travail une butée conformée (33) qui vient en appui d'une part contre une paroi (34) de la chambre de commande (27) et d'autre part contre une saillie (35) de la chambre de travail (32) pour une limitation de fin de course sur les deux côtés.

2. Distributeur électro-pneumatique selon la revendication 1,
**caractérisé en ce qu'**une bague de renforcement rigide ou une douille de renforcement est intégrée dans l'élément d'obturation (29).

3. Distributeur électro-pneumatique selon la revendication 1,
**caractérisé en ce qu'**un guidage (36) en forme de douille est conformé coaxialement sur la butée (33) de l'élément d'obturation (29), qui correspond avec une tige de guidage (37) agencée de façon stationnaire par rapport au corps de distributeur.

4. Distributeur électro-pneumatique selon l'une des revendications précédentes,
**caractérisé en ce que** l'élément d'obturation (29) comprend radialement à l'extérieur un bourrelet d'étanchement conformé ou une lèvre d'étanchement conformée.

5. Distributeur électro-pneumatique selon l'une des revendications précédentes,
**caractérisé en ce que** le servomoteur réalisé à la manière d'une commande pilote est équipé de deux valves pilotes (28).
